(19) Europäisches Patentamt
European Patent Office
Office européen des brevets

(11) **EP 3 476 979 A1**

(12) **EUROPEAN PATENT APPLICATION**

(43) Date of publication:
**01.05.2019 Bulletin 2019/18**

(51) Int Cl.:
***C25B 11/04*** (2006.01)  ***C25B 1/00*** (2006.01)
***C25B 1/04*** (2006.01)

(21) Application number: **17199446.0**

(22) Date of filing: **31.10.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Universität Zürich
8006 Zürich (CH)**

(72) Inventor: **The designation of the inventor has not
yet been filed**

(74) Representative: **Schmauder & Partner AG
Patent- & Markenanwälte VSP
Zwängiweg 7
8038 Zürich (CH)**

(54) **A HYBRID CATALYST SYSTEM FOR A WATER PHOTOOXIDATION PROCESS**

(57)     Here we report a robust and atomically dispersed hybrid catalyst formed in situ on a hematite semiconductor support during photoelectrochemical oxygen evolution by electrostatic adsorption of soluble monomeric $[Ir(OH)_6]^{2-}$ coupled to positively charged $NiO_x$ sites. The alkali-stable $[Ir(OH)_6]^{2-}$ features synergistically enhanced activity towards water oxidation through $NiO_x$ that acts as a "movable bridge" of charge transfer from hematite surface to the Ir center. This hybrid catalyst showed exceptional performance stability in alkaline electrolyte for more than 80 hours of operation. Our findings provide a promising path for soluble catalysts that are weakly and reversibly bound to semiconductor-supported hole-accumulation inorganic materials under catalytic reaction conditions as hybrid active sites for photoelectrocatalysis.

Fig. 1

**Description**

**Field of the invention**

The present invention relates to the field of photoelectrocatalysis and related domains.

**Background of the invention**

Atomically dispersed supported catalysts can maximize atom efficiency and minimize the cost. Despite much progress being made in gas-phase catalysis[1,2], applying such catalysts in renewable energy coupled electrochemistry remains a challenge owing to their limited durability in an electrolyte.

During the past decade, atomically dispersed supported catalysts with 100% exposure of catalytic sites to reactants have attracted increasing research interest and triggered industrial applications, but are rarely exploited for electrocatalysis at solid-liquid interfaces owing to their limited stability[3-6]. One of the harshest reactions in converting solar energy into chemical fuels is the photoelectrochemical oxidation of water to oxygen[7]. This catalytic process needs a bi-component device with a semiconductor photoabsorber that transfers holes to a robust catalyst for oxidizing water[8]. However, limited success has been achieved for the immobilization of atomic-scale inorganic materials and/or molecular complexes on cheap semiconductor supports for a long-term reaction, especially in alkaline electrolyte with a reduced energy loss for the oxygen evolution reaction (OER)[9,10]. Precious metal oxides, such as $IrO_x$, are superior OER catalysts but their cluster-type or monolayer structures are prone to hydroxylation and thus become soluble/detachable in alkaline electrolytes[11-15]. For highly active molecular catalysts grafted on semiconductor supports, the practical operating potential required to drive OER can cleave the organic ligands and lead to the formation of deactivated metal oxide nanoparticles or soluble metal hydroxide species[16,17]. Immobilizing a soluble catalyst directly under OER conditions might present an attractive solution, but some critical issues still remain unresolved[18-20]-how to bridge the communication between soluble catalyst species and semiconductor surfaces, and how to stabilize the performance and integrity of such a system over an extended time scale.

**Summary of the invention**

In view of the above, there is still a need for improved hybrid catalyst systems, particulary to be used for a photoanode of a water photooxidation process. This object is solved by the present invention.

According to one aspect of the invention there is provided a hybrid catalyst system for a photoanode of a water photooxidation process, the catalyst system comprising:

   i) a semiconductor support having a contact surface immersed in an aqueous electrolyte, the contact surface being loaded with an inorganic material homogeneously dispersed thereon,
   ii) a transition metal complex dissolved in the electrolyte,

wherein the semiconductor support is formed of hematite or silicon, and
wherein the inorganic material is a metal oxide $AO_y$ wherein A is a metal selected from Ni, Co and Cu and y is a real number from 1 to 3, and
wherein the transition metal complex has the general formula $[ML_n(OH)_m]^{x-}$, wherein

   - M is a transition metal selected from Ir, Ru, Cu and Co,
   - L is a ligand selected from pentamethylcyclopentadienyl and bipyridine,
   - n is an integer from 0 to 6,
   - m is an integer from 1 to 6, and
   - x is an integer from 0 to 6.

According to another aspect of the invention, the hybrid catalyst system according to the first aspect is used for carrying out a water photooxidation process.

Advantageous embodiments are defined in the dependent claims and are described in the following section.

There are various materials that could be used to form the semiconductor support, most notably silicon or hematite. According to one embodiment (claim 2), the semiconductor support is formed of hematite.

According to the invention, the contact surface of the semiconductor support is loaded with a metal oxide $AO_y$ wherein A is a metal selected from Ni, Co and Cu, preferably Ni or Co, and y is a real number from 1 to 3. According to an advantageous embodiment (claim 3), the metal A is Ni, i.e. the metal oxide is a nickel oxide.

According to one embodiment (claim 4), the transition metal complex dissolved in the electrolyte has the general

formula $[Ir L_n(OH)_m]^{x-}$. In particular (claim 5), the transition metal complex can be $[Ir(OH)_6]^{2-}$.

The amount of inorganic material that can be loaded on the contact surface depends on the performance of the semiconductor forming the support. According to one embodiment (claim 6), the contact surface is provided with 0.8 to 1.2 nmol $cm^{-2}$, preferably about 1 nmol $cm^{-2}$ of the inorganic material loaded thereon.

According to a further embodiment (claim 7), the transition metal complex dissolved in the electrolyte has a concentration of 0.05 to 25 $\mu$M, preferably about 1 $\mu$M.

According to yet another embodiment (claim 8), the electrolyte is aqueous sodium hydroxyde with a concentration of 0.5 to 5 M, preferably about 1 M.

## Brief description of the drawings

The above mentioned and other features and objects of this invention and the manner of achieving them will become more apparent and this invention itself will be better understood by reference to the following description of various embodiments of this invention taken in conjunction with the accompanying drawings, wherein are shown:

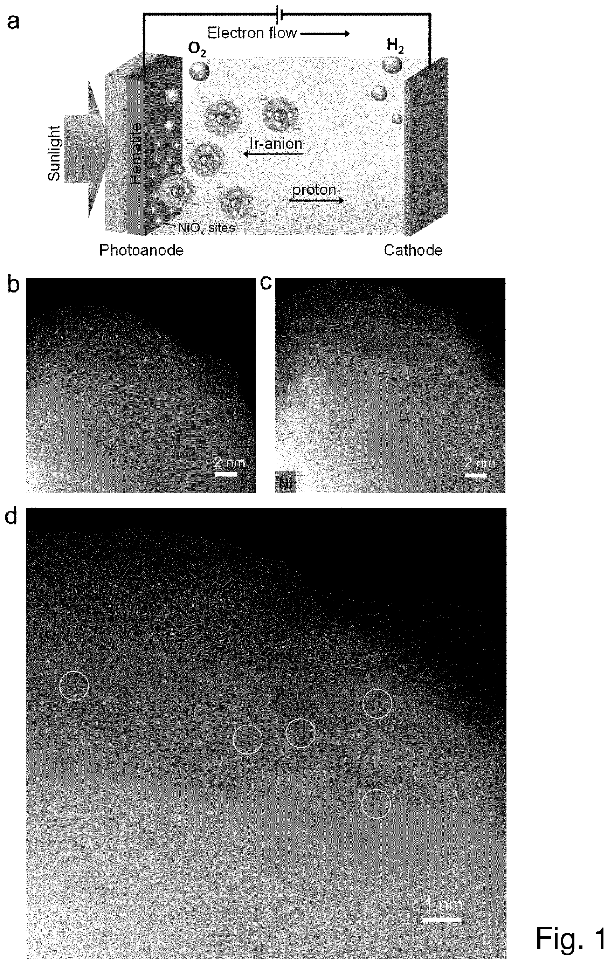

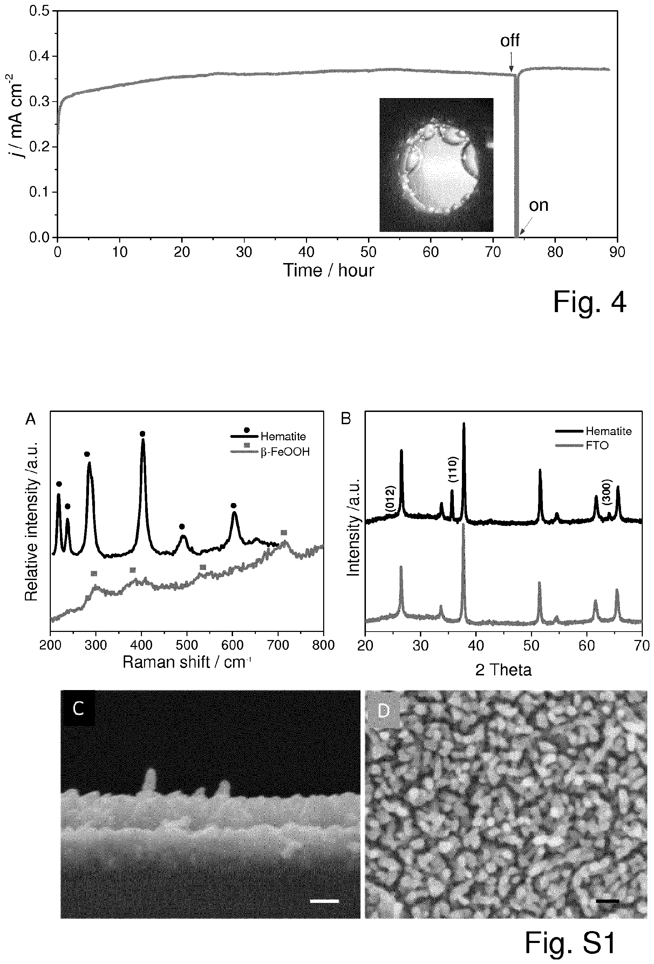

**Fig. 1** **Synthesis and HAADF STEM images, (a)** Schematic illustration of the preparation process at 1.23 $V_{RHE}$ under AM1.5 illumination in an electrolyte containing 1.0 M NaOH and 1.0 $\mu$M Ir-anion. (**b**) High-resolution HAADF STEM image of the hematite-supported catalyst and (**c**) Ni EDX mapping, (**d**) Isolated Ir atoms (exemplarily indicated by circles) are dispersed on the hematite.

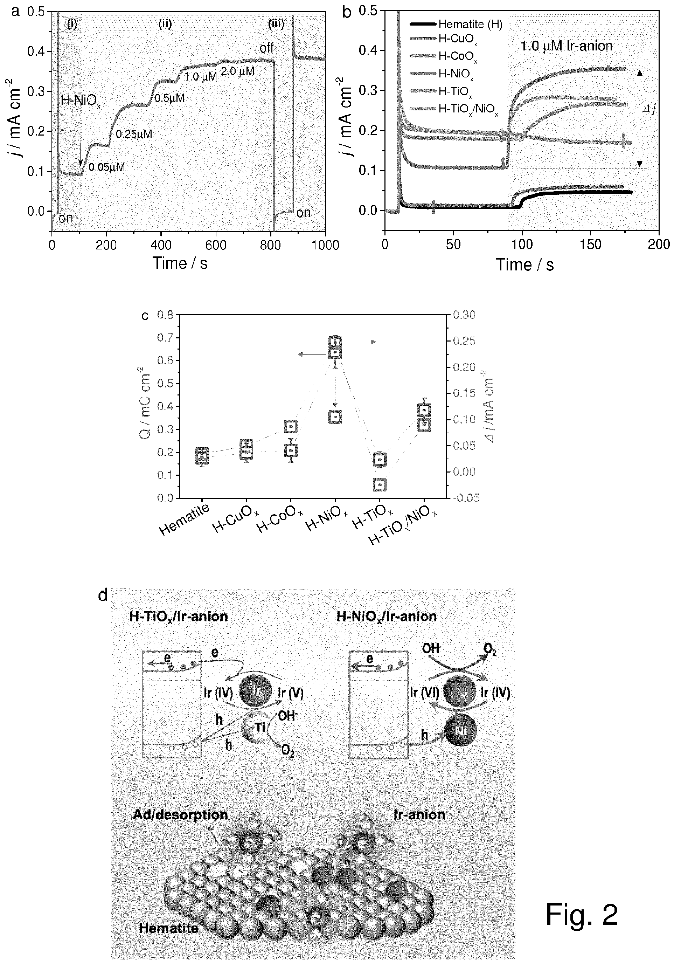

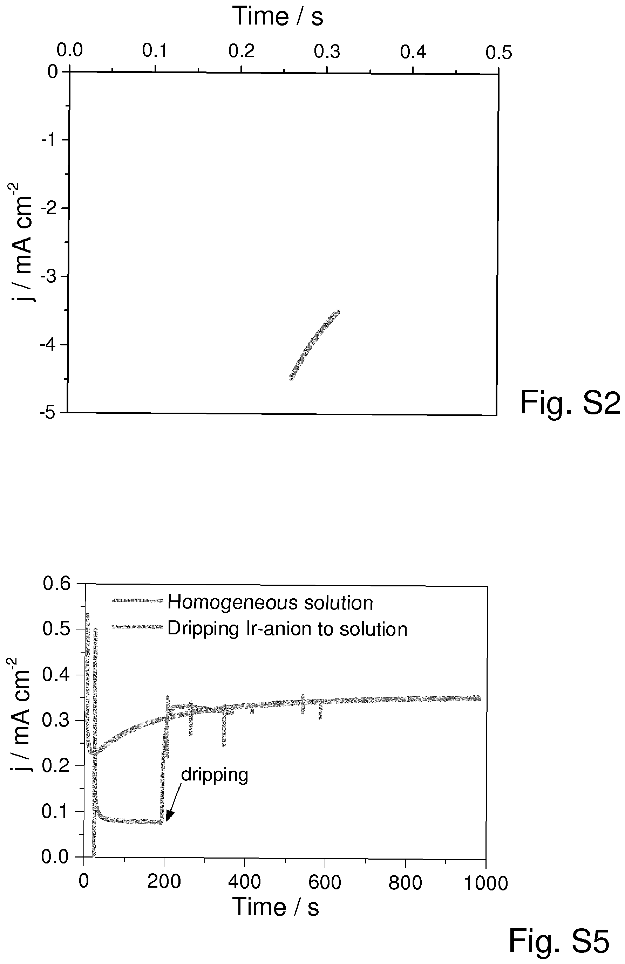

**Fig. 2** **Photoelectrochemical tests, (a)** OER activity of the H-NiO$_x$/Ir-anion with a stepwise increase of Ir-anion solution concentration. (**b**) MO$_x$ modified hematites exhibit significant activity difference ($\Delta j$) upon dripping the Ir-anion-containing solution. (**c**) The correlation between the hole accumulation capacity of H-MO$_x$ before the addition of Ir-anion (Supplementary Fig. S9) and the activity difference $\Delta j$ after introduction of 1.0 $\mu$M Ir-anion relative to the Ir-anion-free electrolytes. The gray arrow shows the decreased capacity of H-NiO$_x$ from 0.64 to 0.35 mC $cm^{-2}$ (gray square) after introduction of Ir-anion to the electrolyte, (**d**) Proposed reaction paths explaining the different roles of TiO$_x$ and NiO$_x$ for the OER.

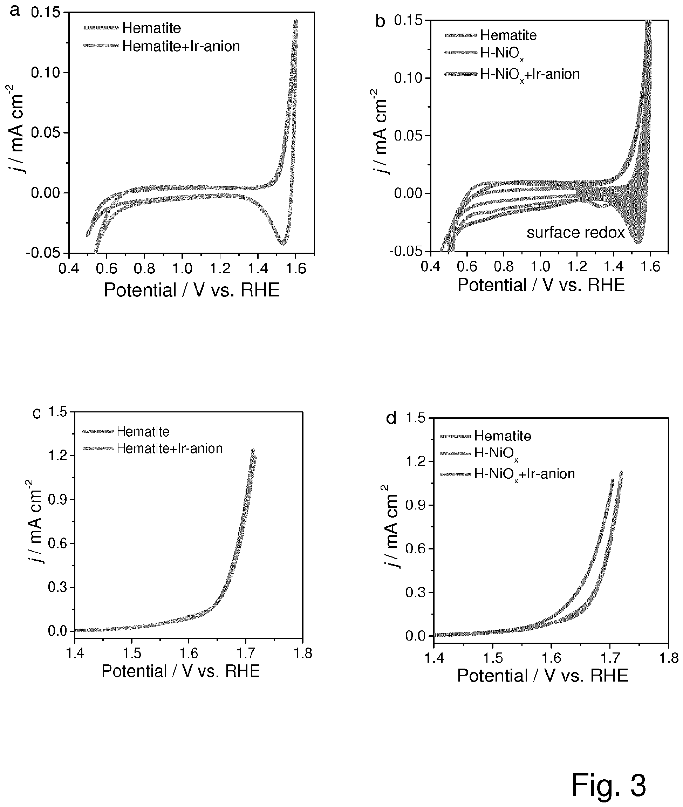

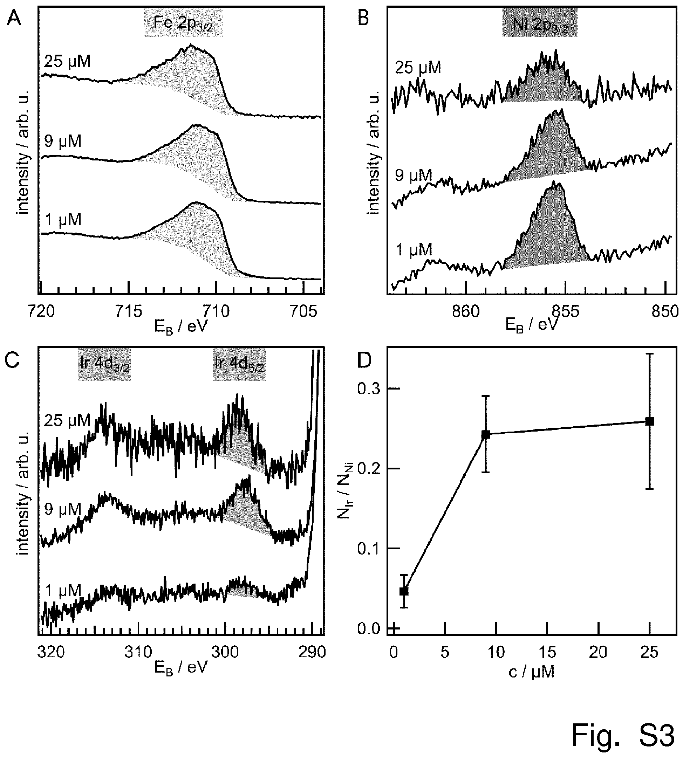

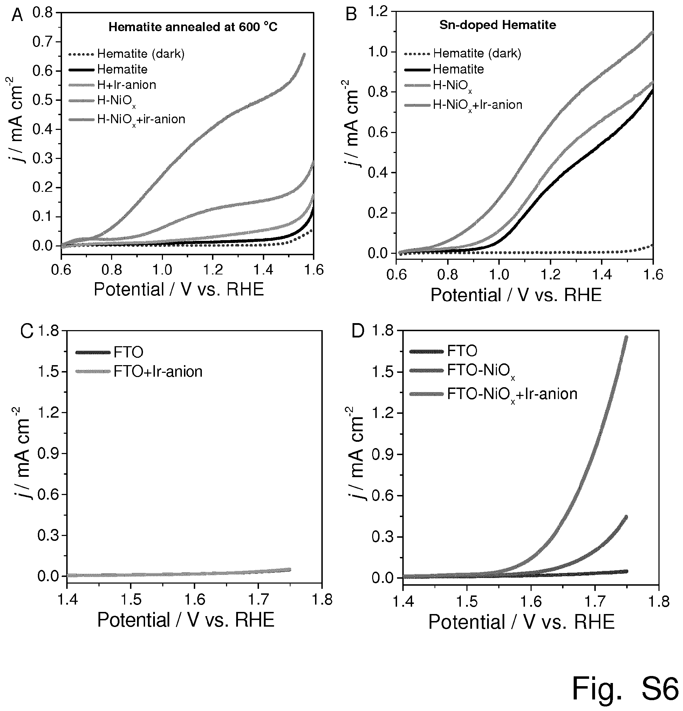

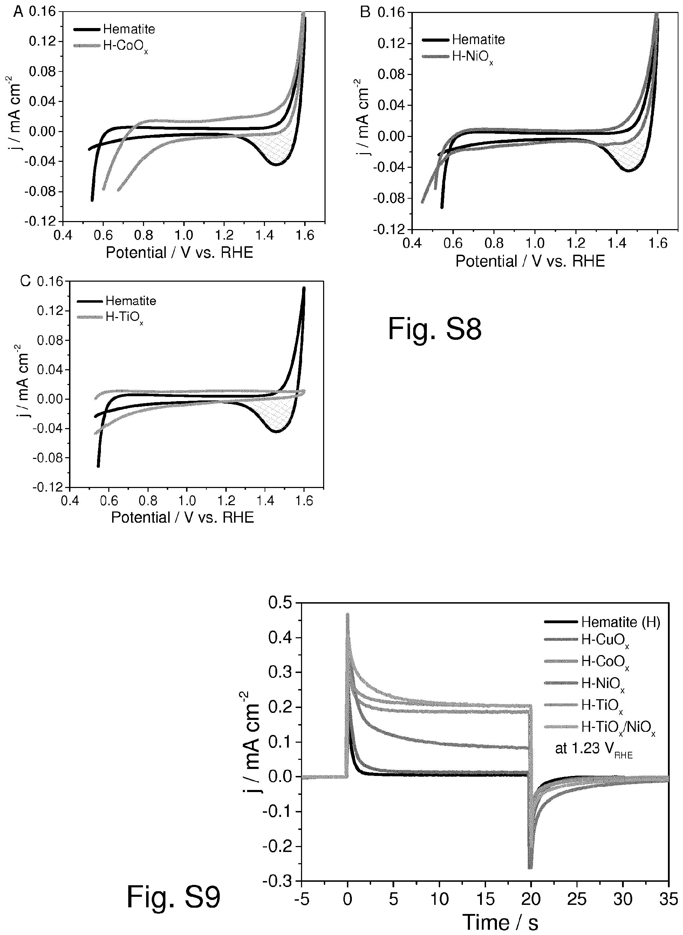

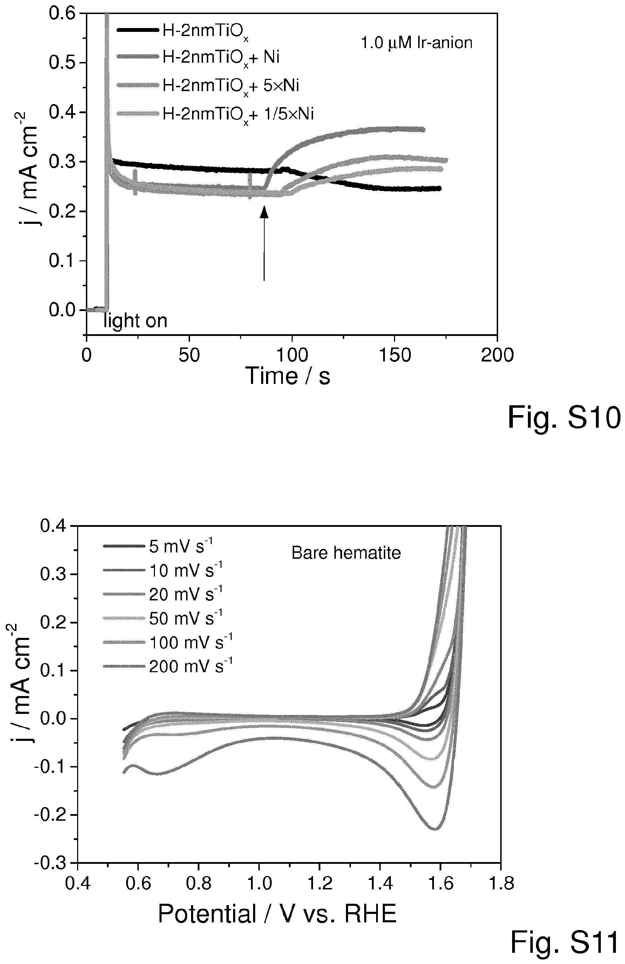

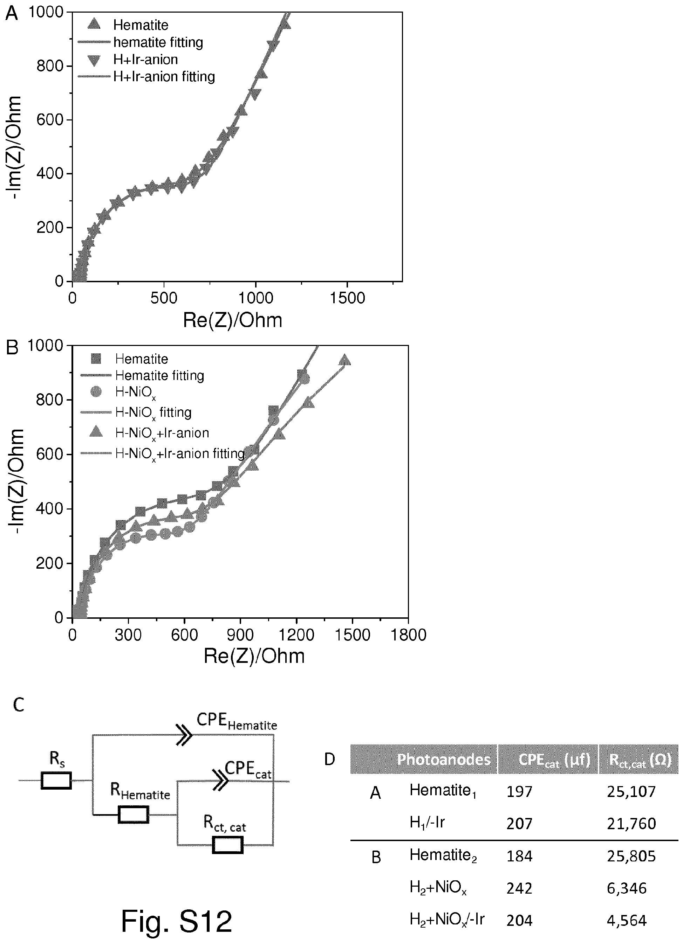

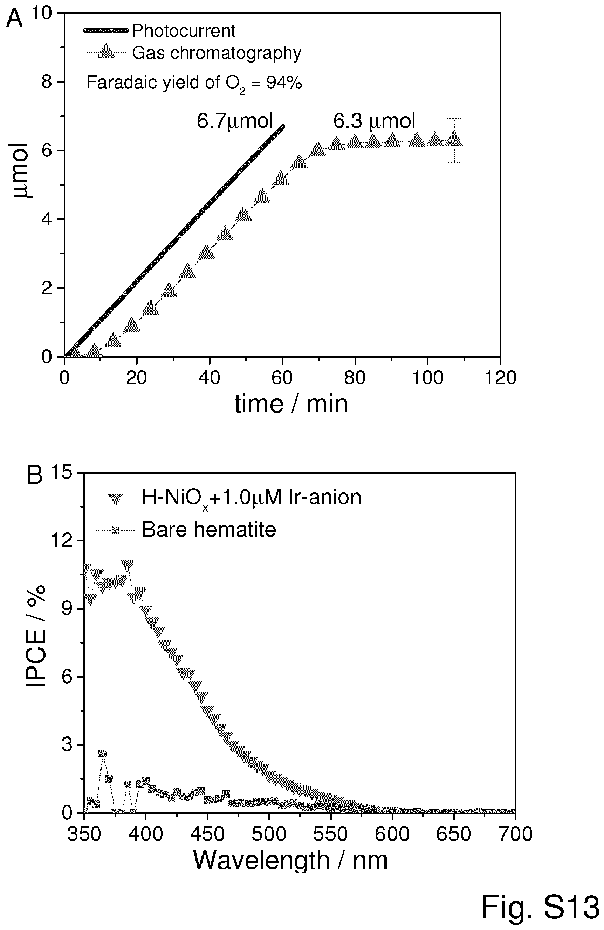

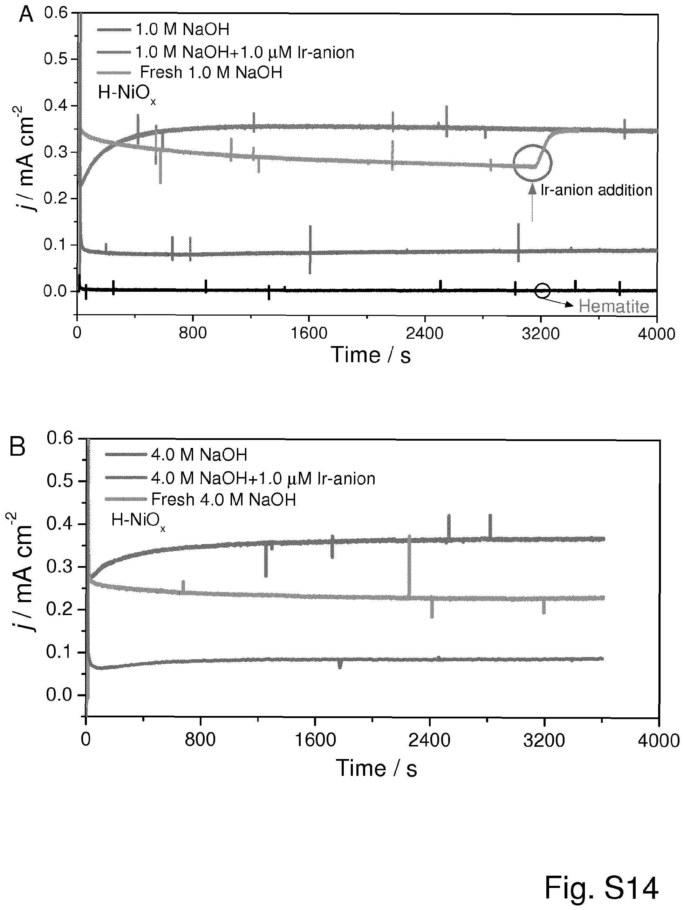

**Fig. 3** **Charge transfer and activity enhancement, (a, b)** Cyclic voltammetry at 50 mV $s^{-1}$ and (c, d) linear sweep voltammetry at 10 mVs$^{-1}$ on pristine hematite and H-NiO$_x$ in 1.0 M NaOH in the dark. The concentration of Ir-anion is 1.0 $\mu$M.

**Fig. 4** **Stability test on H-NiO$_x$.** The chronopotentiometric curve obtained with the H-NiO$_x$ photoelectrode in 4.0 M NaOH+1.0$\mu$M Ir-anion at 1.23 $V_{RHE}$ under AM1.5 illumination. A chopped light operation with 20 min interval was performed after 73 hours of continuous stability test. The image of the photoanode window (inset) exhibits a strong bubble evolution/coverage on the surface of the H-NiO$_x$/Ir-anion photoanode.

## Detailed description of the invention

### *Experimental studies*

We report on a novel hybrid OER catalyst that contains supported MO$_x$ sites (M = Fe, Cu, Co, Ni, and Ti) and soluble monomeric hexahydroxyiridate (IV) $[Ir(OH)_6]^{2-}$ anions (Ir-anions). As an ideal molecular model, we uncover a close relationship between the hole accumulation capacity of MO$_x$ and the enhanced activity of Ir-anions. Among the MO$_x$ sites, the NiO$_x$ showed the highest capacity of hole accumulation and favorable weak "Fe/Ni-O-Ir" bonds with Ir-anions during OER, allowing the accumulated holes to subsequently transfer to Ir sites for OER. Contrary to the prevailing notion that the redox species in an electrolyte acts as hole scavenger, thus poisoning the OER[21,22], we observe that the Ir-anion coupled to hematite supported NiO$_x$ (H-NiO$_x$) demonstrates unusual OER activity enhancement with a turnover frequency of 2.4-12.7 $s^{-1}$ per Ir site at 1.23 $V_{RHE}$ (see Methods). This hybrid catalyst demonstrates exceptional stability in strong alkaline electrolytes (even 4.0 M NaOH) for more than 80 hours. It combines the advantages of soluble molecular catalysts with fully exposed active sites and the benefits of solid-state materials with unique physicochemical properties, bridging the gap between heterogeneous and homogeneous catalysts.

Nanostructured hematite was applied as a support for catalyst loading (Supplementary Fig. 1). In order to avoid the influence of foreign metals on the OER, no extrinsic doping was intentionally introduced in the hematite. The MO$_x$ loading on hematite was achieved through a facile transient electro-reduction of metal cations to metallic sites (Supplementary Fig. S2) (see Methods). Controlling the charge going through the circuit manipulates the amount of metal atoms loaded to the surface. For instance, Ni is electrodeposited at -1.1 V versus Ag/AgCl with a charge density of 0.2 mC $cm^{-2}$ (hereinafter geometric area), which corresponds to -1.0 nmol $cm^{-2}$, leading to -6.2 atoms $nm^{-2}$. The spontaneous

oxidation of Ni in air generates $H-NiO_x$ (Supplementary Fig. S3).

Unlike in the established methods for molecular catalyst loading, where pre-anchoring is required[17], the soluble Ir-anion couples to $H-NiO_x$ sites *in-situ* during the OER at 1.23 $V_{RHE}$ under AM1.5 illumination in a photoelectrochemical (PEC) cell (Fig. 1a). The photo-excited holes reach the surface where the positive charges generate an electric field that attracts the negatively charged Ir-anions. When the measured photocurrent plateau is reached, we assume that the Ir-anion approaches an adsorption/desorption equilibrium, after which the loading of Ir on hematite reaches 0.3-1.6 atoms $nm^{-2}$ (9.5-51.0 $ng/cm^2_{Ir}$). Note that the non-adsorbed Ir-anion in the electrolyte is not consumed and thus recyclable.

To identify the atomically dispersed site motifs, the dispersion of the resulting supported $H-NiO_x$/mono-Ir hybrid was characterized by scanning electron microscopy (STEM) in combination with energy dispersive X-Ray spectroscopy (EDX). Individual Ir atoms are imaged using atomic resolution high angle annular dark field (HAADF) STEM. This technique offers Z-contrast conditions, i.e. the image intensity is roughly proportional to $Z^{1.6}$ - $Z^{1.9}$ where Z is the atomic number of the present element (see Methods). Therefore, the image contrast of Ir (Z=77) strongly exceeds that of Fe (Z=26) and Ni (Z=28), which allows imaging of individual Ir atoms on a selected thin hematite region. Individual Ir atoms (exemplarily indicated by circles) are clearly separated on the hematite surface and show no indication of agglomeration or clustering in Fig. 1d. Figure 1c is a composite of an HAADF STEM image and an Ni EDX map which shows a homogeneous dispersion of Ni on the hematite substrate (Fig. 1b).

To assess how the mass transfer of Ir-anion influences the OER activity, two methods were carried out to prepare the Ir-anion-containing electrolytes (Supplementary Fig. S5). The first test was performed in 10 ml of homogeneous electrolyte containing 1.0 M NaOH and 1.0 $\mu$M Ir-anion (10 nmol Ir-anion in total). The photocurrent density takes more than 1000 seconds to reach the plateau. The second method consisted of dripping an identical amount of Ir-anion solution into the 1.0 M NaOH at a close distance, about 0.5 cm away from the $H-NiO_x$ electrode. The photocurrent increased suddenly to a maximum value and then started to decrease slowly as the momentary high concentration of Ir-anion close to the $H-NiO_x$ electrode gradually diluted to a homogeneous electrolyte. This result indicates that the adsorption/desorption equilibrium is concentration-dependent and that only adsorbed Ir-anions can take part in the OER.

Next, we evaluated the adsorption limitation of Ir-anions to the $H-NiO_x$, with a fixed Ni loading of -1.0 nmol $cm^{-2}$. Different concentrations of Ir-anion were chosen to maximize the catalyst's activity. The $H-NiO_x$ photoanode in 1.0 M NaOH at 1.23 $V_{RHE}$ exhibits a steady-state photocurrent density of 0.09$\pm$0.018 mA $cm^{-2}$ upon switching on the light (Fig. 2a, Zone i). After about 100 seconds, 5$\mu$L of pre-prepared Ir-anion solution (1.0 M NaOH containing 0.1 mM Ir-anion) was dripped into the 10 mL 1.0 M NaOH electrolyte for the formation of a 0.05$\mu$M solution of Ir-anion. The photocurrent density increased to 0.17 mA $cm^{-2}$ and then stabilized. A stepwise increase of Ir-anion concentration further enhances the photocurrent density until the Ir-anion concentration reaches about 2.0 $\mu$M (Fig. 2a, Zone-ii). This result is consistent with the variation of the surface Ir loading, where the surface Ir/Ni ratio increases slowly at the Ir solution concentration above 2.0 $\mu$M (Supplementary Fig. S3). 1.0 $\mu$M Ir-anion represents a good balance of cost-efficiency and high activity and was therefore selected for the following experiments. A chopped light illumination of Zone-iii of Fig. 2a confirms that the enhanced photocurrent density resulted from light irradiation. This activity enhancement of Ir-anion on $H-NiO_x$ relative to bare hematite agrees with the OER polarization curves (Supplementary Fig. S6).

To uncover the interplay between $NiO_x$ and Ir-anions and to understand the role of $NiO_x$ sites, we screened a series of $MO_x$ loadings with different metal ions (Fig. 2b). After dripping of an Ir-anion solution under stirring, an immediate and distinct photocurrent density increase was recorded for $H-NiO_x$ but only a slight enhancement was tracked for pristine hematite, $H-CuO_x$ and $H-CoO_x$ (Fig. 2b, marked with pale color). In contrast, after addition of the Ir-anions, $H-TiO_x$ shows a detrimental effect on OER (the surface coverage of $TiO_x$ on the hematite surface is shown in Supplementary Fig. S7). Similar photocurrent decays were previously reported on mesoporous $TiO_2$[21] and W-Doped $BiVO_4$ photoanodes [22], respectively. A degradation mechanism was proposed in which the reversible adsorption/desorption of Ir-anion short-circuits the photoanode redox cycle at the interface between the semiconductor and the electrode FTO back contact[21].

In the present study, the hematite semiconductor retains the same surface texture. The only difference leading to the activity difference is the decorated $MO_x$ sites on the hematite surfaces, implying a strong dependence of the catalytic behaviors of Ir-anion on the surface properties of $H-MO_x$. Investigations about the surface properties of the $H-MO_x$ were carried out for: **(A)** H-CoOx, **(B)** $H-NiO_x$, and (C) $H-TiO_x$. It was found that the $MO_x$ sites loaded on hematite vary the surface properties. After decoration of $CoO_x$ sites, the redox peak of bare hematite surface was suppressed in the dark, implying that the $CoO_x$ modified the surface redox couple. This argument is also the same in $H-NiO_x$. The $TiO_x$ also inhibited the redox peak of hematite but with a catalytically inactive surface and thus served as a passivation layer the same as $Ga_2O_3$[13]. Notably, although $TiO_x$ reduces the OER activity of the Ir-anions, the deposition of $NiO_x$ onto $H-TiO_x$ for the formation of an $H-TiO_x$/$NiO_x$ surface significantly increases the photocurrent again (Fig. 2b). This is direct evidence for a synergistic enhancement effect between the $NiO_x$ and the Ir-anions.

Increased kinetics for OER requires a catalyst with an efficient surface hole density as shown in previous studies [23-25]. To assess the hole accumulation on $MO_x$ sites, we used a transient photocurrent surface charging-discharging method to evaluate the density of accumulated holes under steady state conditions during the OER at 1.23 $V_{RHE}$. As soon as the photocurrent reaches the steady state, the light was switched off to record the cathodic current overshoot, owing to the continuing flux of electrons to the surface sites recombining with remaining holes (Supplementary Fig. S9). The number of the remaining holes describes the hole accumulation capacity of H-MO$_x$ (Fig. 2c, open blue square), which is in good agreement with the calculated photocurrent density differences ($\Delta j$) of the H-MO$_x$ photoanodes (Fig. 2c, open yellow square) derived from Fig. 2b. It is evident that the H-NiO$_x$ sites exhibit much higher hole accumulation capacity relative to H-TiO$_x$, thus promoting the four-electron OER process.

Before the accumulated holes can translocate to the soluble Ir-anions, the latter have to be bound to the semiconductor surface long enough to allow the photo-excited surface holes to continuously transfer to the Ir sites for catalysis [26-28]. The *in situ* formation of at least one "Fe/M-O-Ir" bond allows this continuous hole transfer to the Ir center. H-TiO$_x$ is thermodynamically more stable and needs a higher overpotential for the hydroxylation by water as required for the formation of a "Fe/Ti-O-Ir" bond [29,30]. This makes the modified surface less efficient for transferring four holes to the Ir-center for generating one oxygen molecule. Consequently, the Ir-anion is not able to catalyze the OER in the case of TiO$_x$ but serves as a hole scavenger, which is reflected in a decrease of the photocurrent (Fig. 2d, left). In contrast, the formation of "Fe/Ni-O-Ir" is favorable, which is consistent with the Ir-Ni binary surface [30], allowing an instant immobilization of Ir-anion (Fig. 2d, bottom). To roughly quantify the possible ratio between NiO$_x$ and Ir-anion, different Ni loading was applied to 2 nm thickness of conformal TiO$_x$ covered hematite (H-2nmTiO$_x$) -relieving the influence of pristine hematite FeO$_x$ sites. The concentration of the Ir-anion was kept at 1.0 $\mu$M. The optimized OER activity was achieved when the amount of NiO$_x$ is four or more times higher than the immobilized Ir anions based on the HAADF STEM images and XPS analysis (see Methods). However, further increasing or decreasing the amount of NiO$_x$ leads to decreased OER activity (Supplementary Fig. S10). Thus, we propose that one Ir-anion may bridge one or more surface sites and this process depends on the pH of the solution [30,31].

To evidence the hole transfer from the hematite surface to Ir-anion through the NiO$_x$ site, cyclic voltammetry (CV) was performed on hematite and H-NiO$_x$ in the dark (Fig. 3). Without NiO$_x$ loading but in the presence of Ir-anions, the overlay of the CV curves of hematite and hematite/Ir-anion shows no detectable difference from 0.8 to 1.6 V$_{RHE}$, implying no significant charge transfer between the hematite and the Ir-anions (Figs. 3a and 3c). When NiO$_x$ was loaded on the hematite, the distinct cathodic peak at 1.55 V$_{RHE}$ of surface iron species was suppressed (Supplementary Fig. S11), substituted by a new cathodic peak at 1.35 V$_{RHE}$, arising from the redox Ni$^{III}$/Ni$^{II}$ couple on hematite substrate [32]. Once the Ir-anions were introduced to the electrolyte, the Ni reduction peak at 1.35 V$_{RHE}$ decreased (Fig. 3b), concomitantly with a highly promoted catalytic activity peak (Fig. 3d), reflecting efficient charge transfer from NiO$_x$ to the Ir-anions. This result is in agreement with the variation of charge transfer resistance across the catalyst/electrolyte interface evaluated by electrochemical impedance (Supplementary Fig. S12). The pristine hematite did not show any significant resistance change after addition of the Ir-anions, whereas decoration of NiO$_x$ on hematite decreased the resistance from 25.8 to 6.3 k$\Omega$, and the subsequent addition of Ir-anions further decreased to 4.6 k$\Omega$, reflecting the favorable charge transfer from NiO$_x$ to Ir-anion. Furthermore, the hole accumulation capacity of H-NiO$_x$ decreased from 0.64 to 0.35 mC cm$^{-2}$ after addition of the Ir-anions, (Fig. 2c, gray square), underlining that the Ni species transferred charge to Ir centers [24]. These results confirm the continuous hole transfer from the hematite surface to the Ir-anions through the NiO$_x$ sites. As an ideal molecular model, the NiO$_x$ sites thus serve as "movable bridges" working within the potential region of OER (Fig. 2d, right), thereby improving the OER efficiency.

We verified that the evolved bubbles were indeed O$_2$ using gas chromatography (GC). Based on the GC results and the measured photocurrents, we calculated that the faradaic yield of O$_2$ is around 94 % (Supplementary Fig. S13). The induced-photon-to-current efficiency (IPCE) was determined to confirm the promotion of hybrid Ir/Ni catalyst relative to the bare hematite (Supplementary Fig. S13). IPCE values match well the band gap of hematite and drop to zero at wavelengths beyond 600 nm.

Furthermore, we evaluated the stability of the H-NiO$_x$ in strong alkaline electrolytes (1.0 and 4.0 M NaOH containing 1.0 $\mu$M Ir-anion). The H-NiO$_x$ demonstrates extremely stable performance in both electrolytes, which makes it a strong candidate as a surface modifier for Ir-anions (Supplementary Fig. S14, gray line). After introducing the Ir-anions, an initial photocurrent increasing at the beginning of the operation was attributed to the preferential adsorption of Ir-anions to the H-NiO$_x$ surface. After this initial phase, the photocurrent density remains constant, indicating the far superior stability (Supplementary Fig. S14, red line) over highly loaded IrO$_x$ nanoparticles[14]. In 4.0 M NaOH, it takes a longer time period till the photocurrent reaches the plateau, probably due to the slower kinetics for the formation of "Fe/Ni-O-Ir" from the pH-dependent dehydroxylation of Ir-anion [31].

To assess the stability of the adsorbed/bonded Ir-anions, the H-NiO$_x$ photoanode and PEC cell were washed several times after 1 hour of operation and freshly-prepared NaOH was added to the PEC cell. The photocurrent density decayed slowly with increasing reaction time (Supplementary Fig. S14), but still retained a distinct activity enhancement relative to Ir-free H-NiO$_x$ in both electrolytes. We conclude that the desorption process is slow during the OER. To measure the reversibility of the Ir-anion adsorption/desorption, Ir-anions were again supplied to the electrolyte, which restored the photocurrent to the initial value (Supplementary Fig. S14a), implying a self-healing feature.

We also assessed the long-term performance stability in 4.0 M NaOH for more than 80 hours of operation (Fig. 4). A continuous stability test of hybrid Ni/Ir sites over 73 hours confirms the high stability. In between, a chopped light operation with a 20 min interval was performed and the covered bubbles were removed by mechanically oscillating the electrolyte (inset of Fig. 4). Upon switching on the light, the photocurrent was restored and new bubbles formed gradually. This result corroborates that the hybrid Ni/Ir electrocatalyst satisfies the stability requirements of intermittent solar light illumination.

The rational design of a reaction condition-stable catalyst that selectively binds to the semiconductor surface sites under operating conditions increases the performance stability as demonstrated in here. The developed molecular-anchoring process provides a general photoelectrochemical route for synthesizing homogeneously and atomically dispersed, supported catalysts. Moreover, this study provides therefore a promising path to explore new materials and strategies for combined heterogeneous/homogeneous electrocatalysis systems - an efficient and general strategy to employ other soluble molecular metal complexes[18] or polyoxometalates[33] on solid-state inorganic materials modified semiconductors for solar-driven water splitting.

**References**

1. Qiao B, Wang A, Yang X, Allard LF, Jiang Z, Cui Y, et al. Single-atom catalysis of CO oxidation using Pt1/FeOx. Nature Chem 2011, 3(8): 634-641.

2. Liu P, Zhao Y, Qin R, Mo S, Chen G, Gu L, et al. Photochemical route for synthesizing atomically dispersed palladium catalysts. Science 2016, 352(6287): 797-800.

3. Zhang S, Nguyen L, Liang J-X, Shan J, Liu J, Frenkel AI, et al. Catalysis on singly dispersed bimetallic sites. Nature Comm 2015, 6: 7938.

4. Flytzani-Stephanopoulos M, Gates BC. Atomically dispersed supported metal catalysts. Annu Rev Chem Biomol Eng 2012, 3: 545-574.

5. Nakamura R, Frei H. Visible light-driven water oxidation by Ir oxide clusters coupled to single Cr centers in mesoporous silica. J Am Chem Soc 2006, 128(33): 10668-10669.

6. Choi CH, Kim M, Kwon HC, Cho SJ, Yun S, Kim H-T, et al. Tuning selectivity of electrochemical reactions by atomically dispersed platinum catalyst. Nature Comm 2016, 7: 10922.

7. Tachibana Y, Vayssieres L, Durrant JR. Artificial photosynthesis for solar water-splitting. Nature Photonics 2012, 6(8): 511-518.

8. Montoya JH, Seitz LC, Chakthranont P, Vojvodic A, Jaramillo TF, Norskov JK. Materials for solar fuels and chemicals. Nature Mater 2017, 16(1): 70-81.

9. Subbaraman R, Tripkovic D, Chang K-C, Strmcnik D, Paulikas AP, Hirunsit P, et al. Trends in activity for the water electrolyser reactions on 3d M(Ni,Co,Fe,Mn) hydr(oxy)oxide catalysts. Nature Mater 2012, 11(6): 550-557.

10. Vannucci AK, Alibabaei L, Losego MD, Concepcion JJ, Kalanyan B, Parsons GN, et al. Crossing the divide between homogeneous and heterogeneous catalysis in water oxidation. Proc Natl Acad Sci USA 2013, 110(52): 20918-20922.

11. Seitz LC, Dickens CF, Nishio K, Hikita Y, Montoya J, Doyle A, et al. A highly active and stable IrOx/SrIrO3 catalyst for the oxygen evolution reaction. Science 2016, 353(6303): 1011-1014.

12. McCrory CCL, Jung S, Peters JC, Jaramillo TF. Benchmarking heterogeneous electrocatalysts for the oxygen evolution reaction. J Am Chem Soc 2013, 135(45): 16977-16987.

13. Nam YS, Magyar AP, Lee D, Kim J-W, Yun DS, Park H, et al. Biologically templated photocatalytic nanostructures for sustained light-driven water oxidation. Nature Nano 2010, 5(5): 340-344.

14. Tilley SD, Cornuz M, Sivula K, Graetzel M. Light-induced water splitting with hematite: improved nanostructure and iridium oxide catalysis. Angew Chem Int Ed 2010, 49(36): 6405-6408.

15. Oh H-S, Nong HN, Reier T, Bergmann A, Gliech M, Ferreira de Araújo J, et al. Electrochemical catalyst-support effects and their stabilizing role for IrOx nanoparticle catalysts during the oxygen evolution reaction. J Am Chem Soc 2016, 138(38): 12552-12563.

16. Grotjahn DB, Brown DB, Martin JK, Marelius DC, Abadjian M-C, Tran HN, et al. Evolution of iridium-based molecular catalysts during water oxidation with ceric ammonium nitrate. J Am Chem Soc 2011, 133(47): 19024-19027.

17. Duan L, Tong L, Xu Y, Sun L. Visible light-driven water oxidation-from molecular catalysts to photoelectrochemical cells. Energy Environ Sci 2011, 4(9): 3296-3313.

18. Barnett SM, Goldberg KI, Mayer JM. A soluble copper-bipyridine water-oxidation electrocatalyst. Nature Chem 2012, 4(6): 498-502.

19. Sheehan SW, Thomsen JM, Hintermair U, Crabtree RH, Brudvig GW, Schmuttenmaer CA. A molecular catalyst for water oxidation that binds to metal oxide surfaces. Nature Comm 2015, 6: 6469

20. Nakagawa T, Bjorge NS, Murray RW. Electrogenerated IrOx nanoparticles as dissolved redox catalysts for water oxidation. JAm Chem Soc 2009, 131(43): 15578-15579.

21. Zhao Y, Vargas-Barbosa NM, Strayer ME, McCool NS, Pandelia M-E, Saunders TP, et al. Understanding the effect of monomeric Iridium(III/IV) aquo complexes on the photoelectrochemistry of IrOx·nH2O-catalyzed water-splitting systems. J Am Chem Soc 2015, 137(27): 8749-8757.

22. Ye H, Park HS, Bard AJ. Screening of electrocatalysts for photoelectrochemical water oxidation on W-doped BiVO4 photocatalysts by scanning electrochemical microscopy. J Phys Chem C 2011, 115(25): 12464-12470.

23. Le Formal F, Pastor E, Tilley SD, Mesa CA, Pendlebury SR, Graetzel M, et al. Rate law analysis of water oxidation on a hematite surface. J Am Chem Soc 2015, 137(20): 6629-6637.

24. Wang Z, Liu G, Ding C, Chen Z, Zhang F, Shi J, et al. Synergetic effect of conjugated Ni(OH)2/IrO2 cocatalyst on titanium-doped hematite photoanode for solar water splitting. J Phys Chem C 2015, 119: 19607-19612.

25. Lin F, Boettcher SW. Adaptive semiconductor/electrocatalyst junctions in water-splitting photoanodes. Nature Mater 2014, 13(1): 81-86.

26. Zhang C, Chen C, Dong H, Shen J-R, Dau H, Zhao J. A synthetic Mn4Ca-cluster mimicking the oxygen-evolving center of photosynthesis. Science 2015, 348(6235): 690-693.

27. Materna KL, Rudshteyn B, Brennan BJ, Kane MH, Bloomfield AJ, Huang DL, et al. Heterogenized iridium water-oxidation catalyst from a silatrane precursor. ACS Catal 2016, 6(8): 5371-5377.

28. Gambardella AA, Feldberg SW, Murray RW. Electron transfer dynamics of iridium oxide nanoparticles attached to electrodes by self-assembled monolayers. J Am Chem Soc 2012, 134(13): 5774-5777.

29. Li Y-F, Liu Z-P, Liu L, Gao W. Mechanism and activity of photocatalytic oxygen evolution on titania anatase in aqueous surroundings. JAm Chem Soc 2010, 132(37): 13008-13015.

30. Reier T, Pawolek Z, Cherevko S, Bruns M, Jones T, Teschner D, et al. Molecular insight in structure and activity of highly efficient, low-Ir Ir-Ni oxide catalysts for electrochemical water splitting (OER). J Am Chem Soc 2015, 137(40): 13031-13040.

31. Zhao Y, Vargas-Barbosa NM, Hernandez-Pagan EA, Mallouk TE. Anodic deposition of colloidal iridium oxide thin films from hexahydroxyiridate(IV) solutions. Small 2011, 7(14): 2087-2093.

32. Trotochaud L, Young SL, Ranney JK, Boettcher SW. Nickel-iron oxyhydroxide oxygen-evolution electrocatalysts: the role of intentional and incidental iron incorporation. J Am Chem Soc 2014, 136(18): 6744-6753.

33. Toma FM, Sartorel A, Iurlo M, Carraro M, Parisse P, Maccato C, et al. Efficient water oxidation at carbon nanotube-polyoxometalate electrocatalytic interfaces. Nature Chem 2010, 2(10): 826-831.

## Supplementary Information

### *Synthesis of hematite and H-MO$_x$*

A nanostructured hematite was applied as a support for catalyst loading. It was prepared by hydrothermal deposition of $\beta$-FeOOH nanorods onto the F-doped SnO$_2$ glass (FTO, TEC 15A 3.0 mm, XOP Física glass company) in an aqueous solution containing 0.15 M FeCl$_3$·6H$_2$O (Sigma-Aldrich) and 1.0 M NaNO$_3$ (Sigma-Aldrich) at 95°C for 1.5 hours[1]. After the reaction, the as-prepared thin films were washed with ethanol/water several times and dried in flowing N$_2$. Then the $\beta$-FeOOH thin films were thermally annealed at 600°C for 2 hours in the air leading to the formation of hematite structure. X-ray diffraction and Raman spectra imply the formation of hematite Fe$_2$O$_3$ (Supplementary Fig. S1). Scanning electron microscopy images show a rough surface that allows for catalyst loading (Supplementary Fig. S1).

The MO$_x$ loading was achieved through a facile transient electro-reduction of metal cations to metallic sites on hematite modified from the reported method[2]. This electrodeposition was implemented in a weak acidic electrolyte (pH=4), which allows for a control of the amount of atoms deposited[2], avoiding the spontaneous binding of cations on oxide semiconductor surfaces that happen in neutral and alkaline electrolytes. Controlling the charge going through the circuit manipulates the amount of metal atoms loaded to the surface. For instance, the Ni is electro-reduced at -1.1 V versus Ag/AgCl with a charge density of 0.2 mC cm$^{-2}$ (geometric area, hereinafter), taking about 0.1 seconds for the whole deposition (Supplementary Fig. S2). The amount of deposited Ni atoms on hematite corresponds to -1.0 nmol cm$^{-2}$, leading to -6.2 atoms nm$^{-2}$. After electrodeposition, the spontaneous oxidation of Ni in air for ~3 days generates NiO$_x$ sites. The main XPS peak positions of Ni$_{2p}$ core level are at 873.5 and 856.0 eV (Supplementary Fig. S3); they are attributed to NiO$_x$ sites. CuOx, CoO$_x$, and NiO$_x$ sites were equally prepared by this transient electrochemical process. The pristine hematite surface was considered as FeO$_x$ sites. TiO$_x$ has been deposited on hematite using an atomic layer deposition system at 120°C (PICSUN R-200). Tetrakis(dimethylamido)-titanium(IV) (99.999%, Sigma-Aldrich, kept at 85°C) and H$_2$O were used as Ti and O sources, respectively. Ti precursor was held in the chamber for 1.6 seconds under 150 sccm nitrogen flow, followed by a 6-second nitrogen purge. H$_2$O was held for 0.1 seconds under 200 sccm nitrogen flow, followed by a 6-second nitrogen purge. TiO$_x$ deposition has been calculated to be 0.50 Å per cycle, determined by ellipsometry on a silicon wafer with a native oxide layer.

### *Synthesis of H-MO$_x$/Ir-anion*

Colorless [Ir(OH)$_6$]$^{-2}$ solution (0.1 mM) was prepared in 1.0 M NaOH by hydrolysis of K$_2$IrCl$_6$[3]. The Ir-anions were electrostatically adsorbed to the positively charged MO$_x$ sites during the photoelectrochemical oxygen evolution reaction (OER) at 1.23 V versus RHE containing Ir-anions in NaOH electrolyte under AM 1.5 illumination.

### *Materials characterizations*

Material crystal phases of the β-FeOOH and the hematite were confirmed using X-ray diffraction and Raman. The X-ray diffraction studies were carried out in the range of scanning angle 20-70° using X-ray diffractometer with Cu Kα radiation of wavelength 0.154060 nm (D8 Discover). A field emission scanning electron microscope (SEM Zeiss Supra 50 VP) was used to observe the surface morphology and estimate the surface texture. X-ray photoelectron spectroscopy (XPS) was performed with a polychromatic MgKα (hv=1253.6 eV) and a mono-chromatized AlKα (hv=1486.6 eV) source in a modified Vacuum Generators ESCALAB 220 (p<10$^{-9}$ mbar)[4]. The energy scale was calibrated as described in this literature[5]. Scanning transmission electron microscopy (STEM) studies were performed using an FEI Titan ChemiSTEM operated at 200kV equipped with a Cs-probe corrector and a high-angle annular dark field (HAADF) detector. This technique offers Z-contrast conditions, i.e. the image intensity is roughly proportional to $Z^{1.6}$ - $Z^{1.9}$, where Z is the atomic number of the present element [6,7]. 'Z-Contrast' conditions, were achieved using a probe semi-angle of 25 mrad and an inner collection angle of the detector of 70 mrad. Compositional maps were obtained with energy-dispersive X-ray spectroscopy (EDX) using four large-solid-angle symmetrical Si drift detectors.

### *Photoelectrochemical characterizations*

Photoelectrochemical performance and the related electrochemical measurements were performed by using an SP-300 Potentiostat, Bio-logic. All measurements were made in alkaline electrolytes (1.0M or 4.0 M NaOH) in a custom-designed Cappuccino Teflon cell with a quartz window (Supplementary Fig. S4). A standard three-electrode setup was applied by using hematite or H-MO$_x$ photoelectrodes as the working electrode and platinum gauze as the counter electrode. All the measured potentials are versus reversible hydrogen electrode (RHE). A 300 W Xenon lamp (LOT-QuantumDesign GmbH, Germany) coupled to a filter (AM 1.5) was used as simulated solar light. The light power density was calibrated to 100 mW cm$^{-2}$ (AM1.5) with a Si reference solar cell (LOT-QuantumDesign GmbH, Germany).

### *The reason that the intrinsic hematite was selected as a platform*

At present, n-type hematite photoanodes which are able to exhibit enhanced photocurrent densities have to be intentionally doped through either high-temperature-diffusion induced doping of Sn from FTO layer or extrinsic doping. However, the doped metals could diffuse to the surface of hematite with the same potential of binding to the soluble Ir-anions as the MO$_x$ sites do. They may thereby serve as active sites influencing water oxidation performance. Thus, to rule out this factor, the intrinsic hematite has simplified surface parameter and thus selected as an ideal platform. Concerning a further extension of catalysts on highly doped semiconductors[8,9], Ni/Ir loaded on Sn-doped hematite demonstrates a decent photocurrent enhancement and a significant negative shift -200 mV of the onset potential, suggesting the viable application as a promising catalyst (Supplementary Fig. S6).

### *Estimated loadings of Ir and turnover frequency (TOF) calculations*

The accurate estimate of Ir loading is challenging owing to the following reasons: first of all, the adsorption/desorption of Ir-anions is dynamic. After the photocurrent density reached the plateau, where we assume that adsorption/desorption was close to the equilibrium. We only considered the loading of Ir-anions after this time point. Second, the estimate of Ir loading by instruments is difficult owing to its extremely low amount.

We indirectly evaluated the Ir loading with respect to Ni loading. The electrodeposited Ni is -6.2 atoms nm$^{-2}$. We estimated the Ir/Ni ratio by quantitative XPS analysis of the Ni 2p$_{3/2}$ and the Ir 4d$_{5/2}$ peaks. The corelevel were recorded with a monochromatic AlKα source (Supplementary Figs. S3A-C). The N$_{Ir}$/N$_{Ni}$ ratio is calculated according to:

$$N_{Ir}/N_{Ni} = (I_{Ir}/\sigma_{Ir}) \times (\sigma_{Ni}/I_{Ni})$$

Where I$_x$ is the measured intensity of the Ni 2p$_{3/2}$ or Ir 4d$_{5/2}$ peak, σ$_x$ is the photoionization cross section[10],

The Ir/Ni ratio as a function of solution Ir concentration is presented in Supplementary Fig. S3D. The adsorbed Ir-anions approach to saturation at the 25 μM Ir solution concentration. At 1.0 μM and based on the Ni loading and the Ir/Ni ratio, Ir loading is -0.3 atoms $nm^{-2}$ (-0.048 nmol $cm^{-2}$), which is used for turnover frequency calculation with an upper limit ($TOF_{up}$). At 25 $\mu M$ and based on the Ni loading and the Ir/Ni ratio, Ir loading is -1.6 atoms $nm^{-2}$ (-0.257 nmol $cm^{-2}$), which is used for turnover frequency calculation with a lower-limit ($TOF_{low}$).

Based on the estimated Faradaic efficiency of 94 % and assuming that every adsorbed Ir atom takes part in the OER, then the TOF value was calculated from the equation[11].

$$TOF_{low}=(\Delta j \times A)/(4 \times F \times n)=(0.25*0.2826*10^{-3}*94\%)/(4*96485.3*0.257*10^{-9}*0.2826)=2.4\ s^{-1}$$

$$TOF_{up}=(\Delta j \times A)/(4 \times F \times n)=(0.25*0.2826*10^{-3}*94\%)/(4*96485.3*0.048*10^{-9}*0.2826)=12.7\ s^{-1}$$

where $\Delta j$ is the photocurrent density difference under the steady state ($\Delta j$, -0.25 $mAcm^{-2}$) at 1.23 V versus RHE. A (0.2826 $cm^2$) is the geometric area exposed to the electrolyte. F is the Faraday constant (96485.3 C $mol^{-1}$). $n$ is the atomic loading of Ir on the surface evaluated by electrochemistry, XPS, and STEM EDX analysis.

### *Supplementary Figures*

**Fig. S1** **Crystal phase and surface morphology of hematite.** (A) Raman spectra of as-prepared $\beta$-FeOOH and hematite films, (B) X-ray diffraction of hematite film, and (C) cross-section and (D) surface morphology of the hematite film. Scale bar is 100 nm.

**Fig. S2** **A transient electro-reduction of Ni ions at -1.1 V versus Ag/AgCl with a charge density of 0.20 mC $cm^{-2}$.** The whole deposition process takes around 0.1 seconds.

**Fig. S3** **XPS evaluation.** (A) Fe $2p_{3/2}$, (B) Ni $2p_{3/2}$ and (C) Ir 4d corelevel spectra with different Ir concentrations in the solution. The shaded peak areas are used for calculating the loadings. (D) The ratio of Ir/Ni as a function of Ir solution concentration.

**Fig. S5** **Ir-anion decoration on the H-NiO$_x$.** Two electrolytes were used for photoelectrochemical decoration of Ir-anions onto the H-NiO$_x$ at 1.23 V versus RHE under AM1.5 illumination. In contrast to a homogeneous electrolyte, the dripping route with an instant high concentration could cause surface adsorption but may loss adsorption selectivity around NiO$_x$ sites, thus leading to different photocurrent plateaus.

**Fig. S6** **Linear sweep voltammograms (LSV) on photoelectrodes under AM1.5 irradiation and dark electrode (FTO) at 10 mV/s in 1.0M NaOH. (A)** The intrinsic hematite annealed at 600 °C for 2 hours exhibited photoactivity about 15 $\mu A$ $cm^{-2}$, in line with the reported value (10 $\mu A$ $cm^{-2}$)[12]. **(B)** For the hybrid Ni/Ir catalyst on doped hematites, the bare hematite doped with Sn presents highly enhanced photocurrent density. After the introduction of Ni/Ir hybrid catalyst, a considerable increase of the photocurrent density and a significant negative shift -200 mV of the onset potential are observed, indicating an increased reaction kinetics for water oxidation. **(C)** Ir-anion presents no OER activity on bare FTO. **(D)** After deposition of NiO$_x$, the Ir-anion shows significantly enhanced OER activity.

**Fig. S7** **Element mapping. (A)** HAADF and **(B)** EDX mapping of Fe and Ti of H-TiO$_x$.

**Fig. S9** **Relationship between the surface hole accumulation capacity (Q) of H-MO$_x$ and the photocurrent density enhancement ($\Delta j$).** Surface hole density at the steady state during OER in the absence of Ir-anions has been used to evaluate the capacity of hole accumulation. The lifetime of the holes on the hematite surface is on the order of 0.1-10 second but the holes in the space-charge region recombine within the picosecond-millisecond timescale[14-16]. The fast recombination of holes in the space-charge region cannot be observed in photocurrent analyses because these electrons are not extracted. Thus, only the "long-lived" holes accumulated on the surface can be counted in the cathodic recombination photocurrent. The calculated *Q* can be found in Fig. 2C in the main text.

**Fig. S10**   **Photoelectrochemical tests on H-2nmTiO$_x$ and H-2nmTiO$_x$-NiO$_x$ photoelectrodes**. A photocurrent decay obtained without decoration of NiO$_x$ in Ir-anion containing electrolyte again confirms that the TiO$_x$ has a detrimental influence on the OER. The deposition of homogeneously dispersed NiO$_x$ on H-2nmTiO$_x$ decreases the steady state photocurrent probably due to the high capacity of hole accumulating but the low kinetics of water oxidation at NiO$_x$ where serves as recombination sites[17].

**Fig. S11**   **|Scan rate-dependent electrochemical tests of bare hematite in the dark in the potential region of 0.6-1.7 V vs RHE.** The observed cathodic peaks are consistent with the results in the literature [18], which implies surface Fe redox species[19].

**Fig. S12**   **Electrochemical impedance on bare hematite and H-NiO$_x$.** Electrochemical impedance was used to clarify the improved charge transfer resistance. It was measured at 0.0 V versus RHE under illumination and shown as Nyquist plots (**A** and **B**). The data was fitted to an equivalent circuit (C) containing constant phase elements of CPE$_{Hematite}$ and CPE$_{cat}$ and charge transfer resistances (R$_{Hematite}$) from hematite to catalyst and (R$_{ct,cat}$) from the catalyst to redox couple in an electrolyte[20,21]. The CPE$_{cat}$ and R$_{ct,cat}$ usually represents the charge behavior at catalyst/electrolyte interface. Charge transfer resistances extracted from the fittings are summarized in table **D.** The resistance R$_{ct,cat}$ decreased from 25.8 to 6,3 kΩ after loading NiO$_x$ and further decreased to 4.5 kΩ after the addition of Ir-anion indicates the favorable charge transfer across the interface, reflected as increased catalytic activity of the hybrid Ni/Ir catalyst. In contrast, without NiO$_x$ but in the presence of Ir-anions, we did not observe a significant decrease of charge transfer resistance. We performed the tests on two individual bare hematite samples, hematite$_1$ and hematite$_2$, which are basically identical.

**Fig. S13**   **Verification of O$_2$, faradaic yield, and the induced-photon-to-current efficiency (IPCE).** (**A**) Verification of O$_2$ evolution and faradaic yield of O$_2$ through using gas chromatography (Bruker Corporation 450 GC). The test was performed after the photocurrent density reached the plateau in 1.0 M NaOH containing 1.0 μM Ir-anions at 1.23 V vs. RHE under illumination. The exposed electrode area to the electrolyte is not specified. The evolved O$_2$ gas during the 60 min was analyzed. The estimated faradaic yield of O$_2$ is -94 %. Since the Ir sites are hydroxylated, there is no lattice oxygen binding to this Ir catalyst, in sharp contrast to core-shell structured IrO$_x$ and mixed core-shell NiIrO$_x$[22,23], where the catalytic activity of surface IrO$_x$ is highly influenced by the subsurface composition and structure in the core region. (**B**) The induced-photon-to-current efficiency (IPCE) was measured using a monochromatic light irradiation (LOT-QuantumDesign GmbH). Integration of the IPCE after loading of hybrid Ni/Ir catalyst yields 0.366 mA cm$^{-2}$.

**Fig. S14**   **The chronopotentiometric curves of H-NiO$_x$ in strong alkaline electrolytes. (A)** 1.0 M and **(B)** 4.0 M NaOH. The chronopotentiometric curve with black color in **(A)** shows the stability of bare hematite. The red arrow in (A) shows the refilling of Ir-anions.

**Supplementary References**

1. Vayssieres L, Beermann N, Lindquist SE, Hagfeldt A. Controlled Aqueous chemical growth of oriented three-dimensional crystalline nanorod arrays: application to iron(III) oxides. Chem Mater 2001, 13(2): 233-235.
2. Hill JC, Landers AT, Switzer JA. An electrodeposited inhomogeneous metal-insulator-semiconductor junction for efficient photoelectrochemical water oxidation. Nat Mater 2015, 14: 1150-1155.
3. Zhao Y, Vargas-Barbosa NM, Hernandez-Pagan EA, Mallouk TE. Anodic deposition of colloidal iridium oxide thin films from hexahydroxyiridate(IV) solutions. Small 2011, 7(14): 2087-2093.
4. Greber T, Raetzo O, Kreutz TJ, Schwaller P, Deichmann W, Wetli E, et al. A photoelectron spectrometer for k-space mapping above the Fermi level. Rev Sci Instrum 1997, 68(12): 4549-4554.
5. Seah MP. Summary of ISO/TC 201 Standard: VII ISO 15472 : 2001-surface chemical analysis-x-ray photoelectron spectrometers-calibration of energy scales. Surf Interface Anal 2001, 31(8): 721-723.
6. Hartel P, Rose H, Dinges C. Conditions and reasons for incoherent imaging in STEM. Ultramicroscopy 1996, 63(2): 93-114.
7. Nellist PD, Pennycook SJ. Incoherent imaging using dynamically scattered coherent electrons. Ultramicroscopy 1999, 78(1-4): 111-124.

8. Du C, Yang X, Mayer MT, Hoyt H, Xie J, McMahon G, et al. Hematite-based water splitting with low turn-on voltages. Angew Chem Int Ed 2013, 52(48): 12692-12695.

9. Kim JY, Magesh G, Youn DH, Jang J-W, Kubota J, Domen K, et al. Single-crystalline, wormlike hematite photoanodes for efficient solar water splitting. Sci Rep 2013, 3: 2681-2681.

10. Scofield JH. Hartree-Slater subshell photoionization cross-sections at 1254 and 1487 eV. J Electron Spectrosc Relat Phenom 1976, 8(2): 129-137.

11. Zhang B, Zheng X, Voznyy O, Comin R, Bajdich M, Garcia-Melchor M, et al. Homogeneously dispersed, multimetal oxygen-evolving catalysts. Science 2016, 352: 333-337.

12. Kay A, Cesar I, Gratzel M. New benchmark for water photooxidation by nanostructured alpba-Fe2O3 films. J Am Chem Soc 2006, 128(49): 15714-15721.

13. Barroso M, Mesa CA, Pendlebury SR, Cowan AJ, Hisatomi T, Sivula K, et al. Dynamics of photogenerated holes in surface modified alpha-Fe2O3 photoanodes for solar water splitting. Proc Natl Acad Sci USA 2012, 109(39): 15640-15645.

14. Le Formal F, Pendlebury SR, Cornuz M, Tilley SD, Grätzel M, Durrant JR. Back electron-hole recombination in hematite photoanodes for water splitting. J Am Chem Soc 2014.

15. Appavoo K, Liu MZ, Black CT, Sfeir MY. Quantifying bulk and surface recombination processes in nanostructured water splitting photocatalysts via in situ ultrafast spectroscopy. Nano Lett 2015, 15(2): 1076-1082.

16. Peter LM, Wijayantha KGU, Tahir AA. Kinetics of light-driven oxygen evolution at alpha-Fe2O3 electrodes. Faraday Discuss 2012, 155: 309-322.

17. Ma Y, Kafizas A, Pendlebury SR, Le Formal F, Durrant JR. Photoinduced absorption spectroscopy of CoPi on BiVO4: the function of CoPi during water oxidation. Adv Funct Mater 2016, 26: 4951-4960.

18. Moir J, Soheilnia N, Liao K, O'Brien P, Tian Y, Burch KS, et al. Activation of ultrathin films of hematite for photoelectrochemical water splitting via H2 treatment. ChemSusChem 2015, 8(9): 1557-1567.

19. Jang J-W, Du C, Ye Y, Lin Y, Yao X, Thorne J, et al. Enabling unassisted solar water splitting by iron oxide and silicon. Nat Commun 2015, 6.

20. Klahr B, Gimenez S, Fabregat-Santiago F, Hamann T, Bisquert J. Water oxidation at hematite photoelectrodes: the role of surface states. J Am Chem Soc 2012, 134(9): 4294-4302.

21. Ding Q, Meng F, English CR, Caban-Acevedo M, Shearer MJ, Liang D, et al. Efficient photoelectrochemical hydrogen generation using heterostructures of Si and chemically exfoliated metallic MoS2. JAm Chem Soc 2014, 136(24): 8504-8507.

22. Nong HN, Gan L, Willinger E, Teschner D, Strasser P. IrOx core-shell nanocatalysts for cost- and energy-efficient electrochemical water splitting. Chem Sci 2014, 5(8): 2955-2963.

23. Moghaddam RB, Wang C, Sorge JB, Brett MJ, Bergens SH. Easily prepared, high activity Ir-Ni oxide catalysts for water oxidation. Electrochem Commun 2015, 60: 109-112.

**Claims**

1. A hybrid catalyst system for a photoanode of a water photooxidation process, the catalyst system comprising:

   i) a semiconductor support having a contact surface immersed in an aqueous electrolyte, the contact surface being loaded with an inorganic material homogeneously dispersed thereon,
   ii) a transition metal complex dissolved in the electrolyte,

   wherein the semiconductor support is formed of hematite or silicon, and
   wherein the inorganic material is a metal oxide $AO_y$ wherein A is a metal selected from Ni, Co and Cu and y is a real number from 1 to 3 , and
   wherein the transition metal complex has the general formula $[ML_n(OH)_m]^{x-}$, wherein

   M is a transition metal selected from Ir, Ru, Cu and Co,
   L is a ligand selected from pentamethylcyclopentadienyl and bipyridine,
   n is an integer from 0 to 6,
   m is an integer from 1 to 6, and
   x is an integer from 0 to 6.

2. The hybrid catalyst system according to claim 1, wherein the semiconductor support is formed of hematite.

3. The hybrid catalyst system according to claim 1 or 2, wherein A is Ni.

**4.** The hybrid catalyst system according to one of claims 1 to 3, wherein M is Ir.

**5.** The hybrid catalyst system according to claim 4, wherein n is 0 and m is 6.

**6.** The hybrid catalyst system according to one of claims 1 to 5, wherein the contact surface is provided with 0.8 to 1.2 nmol cm$^{-2}$, preferably about 1 nmol cm$^{-2}$ of the inorganic material loaded thereon.

**7.** The hybrid catalyst system according to one of claims 1 to 6, wherein the transition metal complex dissolved in the electrolyte has a concentration of 0.05 to 25 $\mu$M, preferably about 1 $\mu$M.

**8.** The hybrid catalyst system according to one of claims 1 to 7, wherein the electrolyte is aqueous sodium hydroxyde with a concentration of 0.5 to 5 M, preferably about 1 M.

**9.** Use of a hybrid catalyst system according to one of claims 1 to 8 for carrying out a water photooxidation process.

a

Sunlight

Hematite

NiO$_x$ sites

Photoanode

Electron flow ⟶

O$_2$

Ir-anion

proton

H$_2$

Cathode

b

2 nm

c

Ni

2 nm

d

1 nm

Fig. 1

Fig. 2

Fig. 3

Fig. 4

Fig. S1

Fig. S2

Fig. S5

Fig. S3

Fig. S6

Fig. S8

Fig. S9

Fig. S10

Fig. S11

Fig. S12

| | Photoanodes | $CPE_{cat}$ (μf) | $R_{ct,cat}$ (Ω) |
|---|---|---|---|
| A | Hematite$_1$ | 197 | 25,107 |
| | H$_1$/-Ir | 207 | 21,760 |
| B | Hematite$_2$ | 184 | 25,805 |
| | H$_2$+NiO$_x$ | 242 | 6,346 |
| | H$_2$+NiO$_x$/-Ir | 204 | 4,564 |

Fig. S13

Fig. S14

**Europäisches Patentamt**
**European Patent Office**
**Office européen des brevets**

# EUROPEAN SEARCH REPORT

Application Number

EP 17 19 9446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LAURA BADIA-BOU ET AL: "Water Oxidation at Hematite Photoelectrodes with an Iridium-Based Catalyst", JOURNAL OF PHYSICAL CHEMISTRY C, vol. 117, no. 8, 31 January 2013 (2013-01-31), pages 3826-3833, XP055452994, US ISSN: 1932-7447, DOI: 10.1021/jp311983n * abstract * | 1-9 | INV. C25B11/04 C25B1/00 C25B1/04 |
| A,D | YIXIN ZHAO ET AL: "Understanding the Effect of Monomeric Iridium(III/IV) Aquo Complexes on the Photoelectrochemistry of IrO x . n H 2 O-Catalyzed Water-Splitting Systems", JOURNAL OF THE AMERICAN CHEMICAL SOCIETY, vol. 137, no. 27, 24 June 2015 (2015-06-24), pages 8749-8757, XP055453190, US ISSN: 0002-7863, DOI: 10.1021/jacs.5b03470 Scheme 1; * abstract * | 1-9 | |
| A,D | TAKAAKI NAKAGAWA ET AL: "Electrogenerated IrO x Nanoparticles as Dissolved Redox Catalysts for Water Oxidation", JOURNAL OF THE AMERICAN CHEMICAL SOCIETY, vol. 131, no. 43, 4 November 2009 (2009-11-04), pages 15578-15579, XP055271266, US ISSN: 0002-7863, DOI: 10.1021/ja9063298 * Title; first paragraph; Scheme 1 * | 1-9 | TECHNICAL FIELDS SEARCHED (IPC)  C25B |
| A | US 2013/240364 A1 (GAMELIN DANIEL R [US] ET AL) 19 September 2013 (2013-09-19) * paragraphs [0006] - [0013], [0161] * | 1-9 | |

The present search report has been drawn up for all claims

| Place of search | Date of completion of the search | Examiner |
|---|---|---|
| Munich | 21 February 2018 | Dunn, Halina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 9446

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2018

| Patent document cited in search report | Publication date | Patent family member(s) | Publication date |
|---|---|---|---|
| US 2013240364 A1 | 19-09-2013 | US 2013240364 A1<br>WO 2011112620 A2 | 19-09-2013<br>15-09-2011 |

EPO FORM P0459

For more details about this annex : see Official Journal of the European Patent Office, No. 12/82

## REFERENCES CITED IN THE DESCRIPTION

**Non-patent literature cited in the description**

- **QIAO B ; WANG A ; YANG X ; ALLARD LF ; JIANG Z ; CUI Y et al.** Single-atom catalysis of CO oxidation using Pt1/FeO. *Nature Chem,* 2011, vol. 3 (8), 634-641

- **LIU P ; ZHAO Y ; QIN R ; MO S ; CHEN G ; GU L et al.** Photochemical route for synthesizing atomically dispersed palladium catalysts. *Science,* 2016, vol. 352 (6287), 797-800

- **ZHANG S ; NGUYEN L ; LIANG J-X ; SHAN J ; LIU J ; FRENKEL AI et al.** Catalysis on singly dispersed bimetallic sites. *Nature Comm,* 2015, vol. 6, 7938

- **FLYTZANI-STEPHANOPOULOS M ; GATES BC.** Atomically dispersed supported metal catalysts. *Annu Rev Chem Biomol Eng,* 2012, vol. 3, 545-574

- **NAKAMURA R ; FREI H.** Visible light-driven water oxidation by Ir oxide clusters coupled to single Cr centers in mesoporous silica. *J Am Chem Soc,* 2006, vol. 128 (33), 10668-10669

- **CHOI CH ; KIM M ; KWON HC ; CHO SJ ; YUN S ; KIM H-T et al.** Tuning selectivity of electrochemical reactions by atomically dispersed platinum catalyst. *Nature Comm,* 2016, vol. 7, 10922

- **TACHIBANA Y ; VAYSSIERES L ; DURRANT JR.** Artificial photosynthesis for solar water-splitting. *Nature Photonics,* 2012, vol. 6 (8), 511-518

- **MONTOYA JH ; SEITZ LC ; CHAKTHRANONT P ; VOJVODIC A ; JARAMILLO TF ; NORSKOV JK.** Materials for solar fuels and chemicals. *Nature Mater,* 2017, vol. 16 (1), 70-81

- **SUBBARAMAN R ; TRIPKOVIC D ; CHANG K-C ; STRMCNIK D ; PAULIKAS AP ; HIRUNSIT P et al.** Trends in activity for the water electrolyser reactions on 3d M(Ni,Co,Fe,Mn) hydr(oxy)oxide catalysts. *Nature Mater,* 2012, vol. 11 (6), 550-557

- **VANNUCCI AK ; ALIBABAEI L ; LOSEGO MD ; CONCEPCION JJ ; KALANYAN B ; PARSONS GN et al.** Crossing the divide between homogeneous and heterogeneous catalysis in water oxidation. *Proc Natl Acad Sci USA,* 2013, vol. 110 (52), 20918-20922

- **SEITZ LC ; DICKENS CF ; NISHIO K ; HIKITA Y ; MONTOYA J ; DOYLE A et al.** A highly active and stable IrOx/SrIrO3 catalyst for the oxygen evolution reaction. *Science,* 2016, vol. 353 (6303), 1011-1014

- **MCCRORY CCL ; JUNG S ; PETERS JC ; JARAMILLO TF.** Benchmarking heterogeneous electrocatalysts for the oxygen evolution reaction. *J Am Chem Soc,* 2013, vol. 135 (45), 16977-16987

- **NAM YS ; MAGYAR AP ; LEE D ; KIM J-W ; YUN DS ; PARK H et al.** Biologically templated photocatalytic nanostructures for sustained light-driven water oxidation. *Nature Nano,* 2010, vol. 5 (5), 340-344

- **TILLEY SD ; CORNUZ M ; SIVULA K ; GRAETZEL M.** Light-induced water splitting with hematite: improved nanostructure and iridium oxide catalysis. *Angew Chem Int Ed 2010,* vol. 49 (36), 6405-6408

- **OH H-S ; NONG HN ; REIER T ; BERGMANN A ; GLIECH M ; FERREIRA DE ARAÚJO J et al.** Electrochemical catalyst-support effects and their stabilizing role for IrOx nanoparticle catalysts during the oxygen evolution reaction. *J Am Chem Soc,* 2016, vol. 138 (38), 12552-12563

- **GROTJAHN DB ; BROWN DB ; MARTIN JK ; MARELIUS DC ; ABADJIAN M-C ; TRAN HN et al.** Evolution of iridium-based molecular catalysts during water oxidation with ceric ammonium nitrate. *J Am Chem Soc,* 2011, vol. 133 (47), 19024-19027

- **DUAN L ; TONG L ; XU Y ; SUN L.** Visible light-driven water oxidation-from molecular catalysts to photoelectrochemical cells. *Energy Environ Sci,* 2011, vol. 4 (9), 3296-3313

- **BARNETT SM ; GOLDBERG KI ; MAYER JM.** A soluble copper-bipyridine water-oxidation electrocatalyst. *Nature Chem,* 2012, vol. 4 (6), 498-502

- **SHEEHAN SW ; THOMSEN JM ; HINTERMAIR U ; CRABTREE RH ; BRUDVIG GW ; SCHMUTTENMAER CA.** A molecular catalyst for water oxidation that binds to metal oxide surfaces. *Nature Comm,* 2015, vol. 6, 6469

- **NAKAGAWA T ; BJORGE NS ; MURRAY RW.** Electrogenerated IrOx nanoparticles as dissolved redox catalysts for water oxidation. *J Am Chem Soc,* 2009, vol. 131 (43), 15578-15579

- **ZHAO Y ; VARGAS-BARBOSA NM ; STRAYER ME ; MCCOOL NS ; PANDELIA M-E ; SAUNDERS TP et al.** Understanding the effect of monomeric Iridium(III/IV) aquo complexes on the photoelectrochemistry of IrOx·nH2O-catalyzed water-splitting systems. *J Am Chem Soc,* 2015, vol. 137 (27), 8749-8757

- **YE H ; PARK HS ; BARD AJ.** Screening of electrocatalysts for photoelectrochemical water oxidation on W-doped BiVO4 photocatalysts by scanning electrochemical microscopy. *J Phys Chem C,* 2011, vol. 115 (25), 12464-12470
- **LE FORMAL F ; PASTOR E ; TILLEY SD ; MESA CA ; PENDLEBURY SR ; GRAETZEL M et al.** Rate law analysis of water oxidation on a hematite surface. *J Am Chem Soc,* 2015, vol. 137 (20), 6629-6637
- **WANG Z ; LIU G ; DING C ; CHEN Z ; ZHANG F ; SHI J et al.** Synergetic effect of conjugated Ni(OH)2/IrO2 cocatalyst on titanium-doped hematite photoanode for solar water splitting. *J Phys Chem C,* 2015, vol. 119, 19607-19612
- **LIN F ; BOETTCHER SW.** Adaptive semiconductor/electrocatalyst junctions in water-splitting photoanodes. *Nature Mater,* 2014, vol. 13 (1), 81-86
- **ZHANG C ; CHEN C ; DONG H ; SHEN J-R ; DAU H ; ZHAO J.** A synthetic Mn4Ca-cluster mimicking the oxygen-evolving center of photosynthesis. *Science,* 2015, vol. 348 (6235), 690-693
- **MATERNA KL ; RUDSHTEYN B ; BRENNAN BJ ; KANE MH ; BLOOMFIELD AJ ; HUANG DL et al.** Heterogenized iridium water-oxidation catalyst from a silatrane precursor. *ACS Catal,* 2016, vol. 6 (8), 5371-5377
- **GAMBARDELLA AA ; FELDBERG SW ; MURRAY RW.** Electron transfer dynamics of iridium oxide nanoparticles attached to electrodes by self-assembled monolayers. *J Am Chem Soc,* 2012, vol. 134 (13), 5774-5777
- **LI Y-F ; LIU Z-P ; LIU L ; GAO W.** Mechanism and activity of photocatalytic oxygen evolution on titania anatase in aqueous surroundings. *JAm Chem Soc,* 2010, vol. 132 (37), 13008-13015
- **REIER T ; PAWOLEK Z ; CHEREVKO S ; BRUNS M ; JONES T ; TESCHNER D et al.** Molecular insight in structure and activity of highly efficient, low-Ir Ir-Ni oxide catalysts for electrochemical water splitting (OER). *J Am Chem Soc,* 2015, vol. 137 (40), 13031-13040
- **ZHAO Y ; VARGAS-BARBOSA NM ; HERNANDEZ-PAGAN EA ; MALLOUK TE.** Anodic deposition of colloidal iridium oxide thin films from hexahydroxyiridate(IV) solutions. *Small,* 2011, vol. 7 (14), 2087-2093
- **TROTOCHAUD L ; YOUNG SL ; RANNEY JK ; BOETTCHER SW.** Nickel-iron oxyhydroxide oxygen-evolution electrocatalysts: the role of intentional and incidental iron incorporation. *J Am Chem Soc,* 2014, vol. 136 (18), 6744-6753
- **TOMA FM ; SARTOREL A ; IURLO M ; CARRARO M ; PARISSE P ; MACCATO C et al.** Efficient water oxidation at carbon nanotube-polyoxometalate electrocatalytic interfaces. *Nature Chem,* 2010, vol. 2 (10), 826-831
- **VAYSSIERES L ; BEERMANN N ; LINDQUIST SE ; HAGFELDT A.** Controlled Aqueous chemical growth of oriented three-dimensional crystalline nanorod arrays: application to iron(III) oxides. *Chem Mater,* 2001, vol. 13 (2), 233-235
- **HILL JC ; LANDERS AT ; SWITZER JA.** An electrodeposited inhomogeneous metal-insulator-semiconductor junction for efficient photoelectrochemical water oxidation. *Nat Mater,* 2015, vol. 14, 1150-1155
- **GREBER T ; RAETZO O ; KREUTZ TJ ; SCHWALLER P ; DEICHMANN W ; WETLI E et al.** A photoelectron spectrometer for k-space mapping above the Fermi level. *Rev Sci Instrum,* 1997, vol. 68 (12), 4549-4554
- **SEAH MP.** Summary of ISO/TC 201 Standard: VII ISO 15472 : 2001-surface chemical analysis-x-ray photoelectron spectrometers-calibration of energy scales. *Surf Interface Anal,* 2001, vol. 31 (8), 721-723
- **HARTEL P ; ROSE H ; DINGES C.** Conditions and reasons for incoherent imaging in STEM. *Ultramicroscopy,* 1996, vol. 63 (2), 93-114
- **NELLIST PD ; PENNYCOOK SJ.** Incoherent imaging using dynamically scattered coherent electrons. *Ultramicroscopy,* 1999, vol. 78 (1-4), 111-124
- Hematite-based water splitting with low turn-on voltages. **DU C ; YANG X ; MAYER MT ; HOYT H ; XIE J ; MCMAHON G et al.** Angew Chem Int Ed. 2013, vol. 52, 12692-12695
- **KIM JY ; MAGESH G ; YOUN DH ; JANG J-W ; KUBOTA J ; DOMEN K et al.** Single-crystalline, wormlike hematite photoanodes for efficient solar water splitting. *Sci Rep,* 2013, vol. 3, 2681-2681
- **SCOFIELD JH.** Hartree-Slater subshell photoionization cross-sections at 1254 and 1487 eV. *J Electron Spectrosc Relat Phenom,* 1976, vol. 8 (2), 129-137
- **ZHANG B ; ZHENG X ; VOZNYY O ; COMIN R ; BAJDICH M ; GARCIA-MELCHOR M et al.** Homogeneously dispersed, multimetal oxygen-evolving catalysts. *Science,* 2016, vol. 352, 333-337
- **KAY A ; CESAR I ; GRATZEL M.** New benchmark for water photooxidation by nanostructured alpba-Fe2O3 films. *J Am Chem Soc,* 2006, vol. 128 (49), 15714-15721
- **BARROSO M ; MESA CA ; PENDLEBURY SR ; COWAN AJ ; HISATOMI T ; SIVULA K et al.** Dynamics of photogenerated holes in surface modified alpha-Fe2O3 photoanodes for solar water splitting. *Proc Natl Acad Sci USA,* 2012, vol. 109 (39), 15640-15645
- **LE FORMAL F ; PENDLEBURY SR ; CORNUZ M ; TILLEY SD ; GRÄTZEL M ; DURRANT JR.** Back electron-hole recombination in hematite photoanodes for water splitting. *J Am Chem Soc,* 2014

- **APPAVOO K ; LIU MZ ; BLACK CT ; SFEIR MY.** Quantifying bulk and surface recombination processes in nanostructured water splitting photocatalysts via in situ ultrafast spectroscopy. *Nano Lett,* 2015, vol. 15 (2), 1076-1082
- **PETER LM ; WIJAYANTHA KGU ; TAHIR AA.** Kinetics of light-driven oxygen evolution at alpha-Fe2O3 electrodes. *Faraday Discuss,* 2012, vol. 155, 309-322
- **MA Y ; KAFIZAS A ; PENDLEBURY SR ; LE FORMAL F ; DURRANT JR.** Photoinduced absorption spectroscopy of CoPi on BiVO4: the function of CoPi during water oxidation. *Adv Funct Mater,* 2016, vol. 26, 4951-4960
- **MOIR J ; SOHEILNIA N ; LIAO K ; O'BRIEN P ; TIAN Y ; BURCH KS et al.** Activation of ultrathin films of hematite for photoelectrochemical water splitting via H2 treatment. *ChemSusChem,* 2015, vol. 8 (9), 1557-1567
- **JANG J-W ; DU C ; YE Y ; LIN Y ; YAO X ; THORNE J et al.** Enabling unassisted solar water splitting by iron oxide and silicon. *Nat Commun,* 2015, vol. 6
- **KLAHR B ; GIMENEZ S ; FABREGAT-SANTIAGO F ; HAMANN T ; BISQUERT J.** Water oxidation at hematite photoelectrodes: the role of surface states. *J Am Chem Soc,* 2012, vol. 134 (9), 4294-4302
- **DING Q ; MENG F ; ENGLISH CR ; CABAN-ACEVEDO M ; SHEARER MJ ; LIANG D et al.** Efficient photoelectrochemical hydrogen generation using heterostructures of Si and chemically exfoliated metallic MoS. *J Am Chem Soc,* 2014, vol. 136 (24), 8504-8507
- **NONG HN ; GAN L ; WILLINGER E ; TESCHNER D ; STRASSER P.** IrOx core-shell nanocatalysts for cost- and energy-efficient electrochemical water splitting. *Chem Sci,* 2014, vol. 5 (8), 2955-2963
- **MOGHADDAM RB ; WANG C ; SORGE JB ; BRETT MJ ; BERGENS SH.** Easily prepared, high activity Ir-Ni oxide catalysts for water oxidation. *Electrochem Commun,* 2015, vol. 60, 109-112